# EUROPÄISCHE PATENTSCHRIFT

(11) **EP 0 548 093 B1**
(45) Veröffentlichungstag und Bekanntmachung des Hinweises auf die Patenterteilung: **16.03.1994**
(21) Anmeldenummer: 91914584.7
(22) Anmeldetag: 09.08.1991
(51) Int. Cl.: B62D 25/16

(54) **VORDERER KOTFLÜGEL FÜR PERSONENKRAFTWAGEN**
FRONT WING
GARDE-BOUE AVANT POUR VOITURE AUTOMOBILE

(30) Priorität: 21.09.1990 DE 4029954
(43) Veröffentlichungstag der Anmeldung: 30.06.1993
(73) Patentinhaber: AUDI AG, 85045 Ingolstadt (DE)
(72) Erfinder: ERL, Otto, D-8076 Baar-Ebenhausen (DE); ADLER, Hermann, W-8070 Ingolstadt (DE)
(74) Vertreter: Gramm, Werner, Prof., Dipl.-Ing.
(86) Internationale Anmeldenummer: EP9101514
(87) Internationale Veröffentlichungsnummer: WO9205064

(56) Entgegenhaltungen:
- EP-A- 0 063 372
- EP-A- 0 253 989
- DE-A- 3 007 760

## Beschreibung

Die Erfindung betrifft einen vorderen Kotflügel für einen Personenkraftwagen gemäß Oberbegriff des Anspruchs 1.

Aus der EP-A-0253989 ist ein gattungsgemäßer Kotflügel bekannt. Der dort beschriebene Kotflügel besitzt in dem unteren Bereich vor dem Radausschnitt einen großen Blechanteil, der entsprechend zum Gesamtgewicht beiträgt.

Es ist wünschenswert, ohne nachteilige Beeinflussung der übrigen Eigenschaften das Gesamtgewicht eines Kotflügels zu reduzieren.

Es stellt sich dementsprechend die Aufgabe, einen Kotflügel zu schaffen, der eine hohe Eigensteifigkeit besitzt, wobei der Kotflügel gleichzeitig hinsichtlich seines Gewichtes optimiert werden soll. Außerdem ist sicherzustellen, daß kein unerwünschtes Resonanzverhalten im Fahrbetrieb, was zu akustischen Geräuschen und zum Dröhnen der Karosserie führen würde, auftritt. Letztendlich muß der Kotflügel im Unfall den Anforderungen an das Knautschverhalten genügen.

Die oben erwähnte Aufgabe wird durch einen Kotflügel gemäß Anspruch 1 gelöst.

Bei der Gestaltung des Kotflügels ist besondere Aufmerksamkeit dem vor dem Radausschnitt liegenden Bereich zugekommen, der in der im Anspruch detailliert beschriebenen Form eine hohe Eigensteifigkeit besitzt, ohne daß dies gewichtsmäßig nachteilige Auswirkungen hat. Dabei besitzt die vordere Befestigung in Verbindung mit dem Ausschnitt für die Scheinwerfer/Leuchteneinheit eine besondere, sich auf die Gesamtfestigkeit des Kotflügels positiv auswirkende Eigensteifigkeit. Gleichzeitig wurde Wert auf leichte Montage des Kotflügels gelegt, wobei trotz der leichten Montierbarkeit eine hohe Festigkeit beibehalten bleiben soll.

In den Unteransprüchen sind bevorzugte Ausführungsformen des erfindungsgemäßen Kotflügels beschrieben.

Im folgenden wird der Kotflügel anhand der Zeichnung erläutert. Es zeigen:
- Fig. 1: eine Seitenansicht des erfindungsgemäßen Kotflügels;

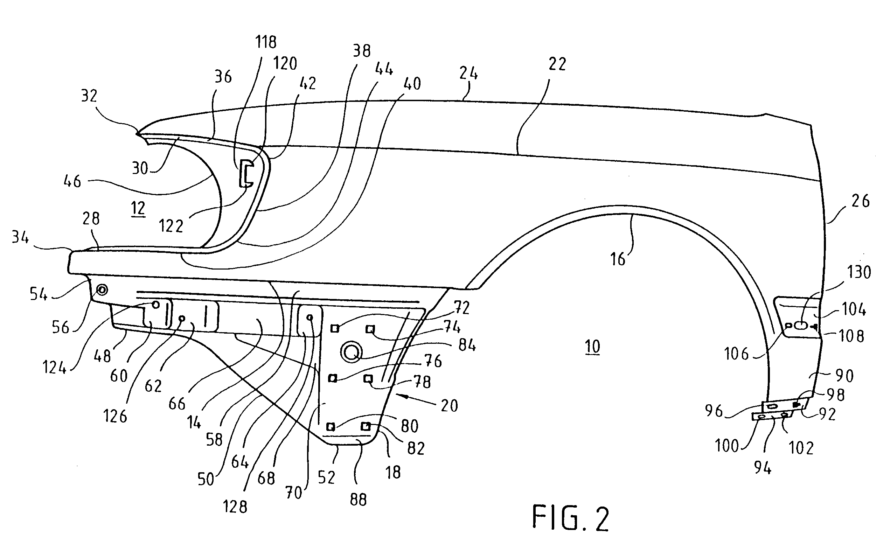

- Fig. 2: eine Ansicht des erfindungsgemäßen Kotflügels schräg von vorne; und
- Fig. 3: die Ansicht des erfindungsgemäßen Kotflügels von unten.

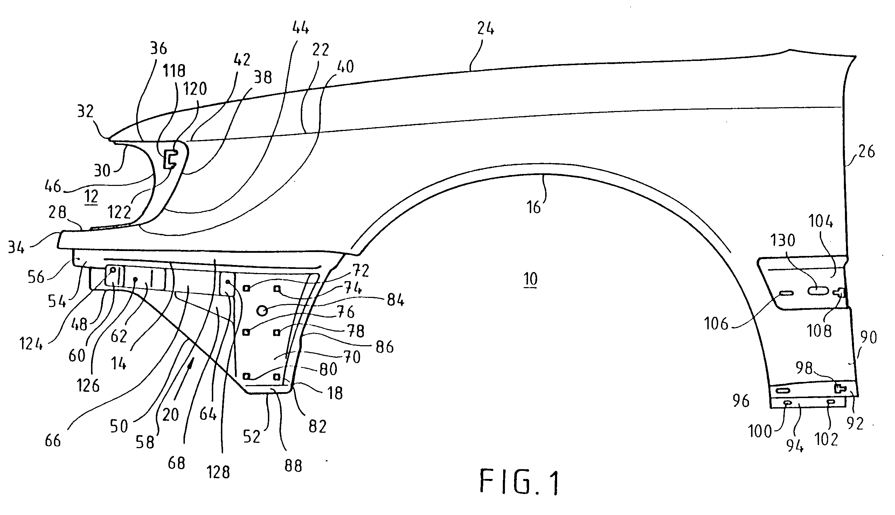

In der Beschreibung und in den Ansprüchen beziehen sich die Bezeichnungen vorne und hinten auf die Fahrtrichtung des mit dem Kotflügel versehenen Kraftfahrzeuges, "vorne" ist also in Richtung der Frontscheinwerfer, während "hinten" den Bereich des Kotflügels meint, an dem sich die Fahrzeugtür anschließt. Die Bezeichnungen "oben" und "unten" beziehen sich auf die Einbaurichtung, die Bezeichnungen "einwärts" und "auswärts" beziehen sich auf die Richtungen senkrecht zur Betrachtungsebene der Fig. 1, also in Richtung der Fahrzeugachsen. "Einwärts" ist die Richtung von der Ebene des Kotflügels zum Motor hin, "auswärts" ist die Richtung auf den Betrachter zu.

Der in den Figuren dargestellte Kotflügel besitzt einen Radausschnitt 10. Der Radausschnitt 10 ist etwa halbkreisförmig ausgebildet und besitzt einen oberen Scheitelpunkt 16. Zwischen dem Scheitelpunkt 16 und dem vorderen unteren Rand 18 des Radausschnittes verläuft von dem Rand des Radausschnittes 10 nach vorne etwa auf halber Höhe ein Absatz 14, der dadurch gebildet ist, daß oberhalb dieses Absatzes das Blech des Kotflügels auswärts steht und unterhalb dieses Absatzes 14 einwärts steht, dementsprechend sich in dem Absatz 14 eine Stufe ausbildet. Der Rand des Radausschnittes 10 ist unterhalb dieses Absatzes 14 abweichend von dem exakten Halbkreis etwas nach vorne versetzt.

Unterhalb des Absatzes 14 schließt sich ein strukturierter Bereich 20 an, der durch seine entsprechende Ausgestaltung bei der Anpassung mit Befestigungspunkte an die Fahrzeugkarosserie eine hohe Eigensteifigkeit besitzt und insbesondere durch die gewählte Formgebung frei ist von Resonanzen und Dröhnstellen, so daß der Kotflügel im Fahrbetrieb des Kraftfahrzeuges akustisch unauffällig ist.

Der untere Rand dieses strukturierten Bereiches besitzt in seinem vordersten Bereich zwei Stufen, läuft dann in seiner Linienführung nach hinten erst parallel zum Absatz 14, wie unter dem Bezugszeichen 48 angedeutet, wird dann, mit dem Bezugszeichen 50 bezeichnet, etwa 45° nach unten geführt, um anschließend über den letzten Bereich 52 wieder parallel zum Absatz 14 zu laufen. Dabei ist hinter der ersten Stufe 54 in dem Blechbereich von dem Absatz 14 nach unten eine Rundung 58 geführt, so daß dieser Teil des strukturierten Bereiches 20 unterhalb der Rundung 58 einwärts zurücktritt. Unterhalb der Rundung 58 ist etwa entlang der ersten zwei Drittel eine Vertiefung vorgesehen, die Abstufungen mit von oben nach unten verlaufenden Stufen besitzt, so daß sich Stufen 60, 62 und 66 ausbilden. Am Ende dieses vertieften Bereiches ist eine Einsenkung 64 in Einwärtsrichtung vorgenommen, in dieser Einsenkung 64 befindet sich in etwa mittig ein sechseckiges Loch 68.

Die erste der erwähnten Stufen, die Stufe 60, besitzt ebenfalls eine Befestigungsöffnung 124, in der nächsten Stufe 62 ist eine sechseckige Öffnung 126 vorgesehen. Vor diesem einwärts gezogenen Bereich mit den Stufen 60, 62, dem anschließendem Bereich 66 und der Endvertiefung 64 befindet sich im vorderen Bereich des Kotflügels knapp unterhalb des Absatzes 14 eine Befestigungsöffnung 56 in der Stufe 54.

Unterhalb der Stufe 66 und der Vertiefung 64 ist durch eine Ziehkante in Auswärtsrichtung die obere Kante eines Dreiecks 68 bestimmt, dessen untere schräg verlaufende Kante nochmals auswärts gezogen ist, so daß der unterhalb dieses Dreiecks liegende Bereich nach außen vorspringt. Rüchwärtig endet das Dreieck 68 an einer ebenen Fläche 70, die oben von der Rundung 58 unter der Kante 14 und unten durch eine einwärtsspringende Stufe 88 begrenzt wird. Rückwärtig ist diese Ebene 70 durch einen leichten Wulst 86 begrenzt, der den Rand des Radausschnittes 10 bildet und in diesem Bereich einen einwärts gerichteten Flansch 110 besitzt, der Befestigungsöffnungen 112, 114 und 116 aufweist.

Die Ebene 70 besitzt 6 rechteckig ausgebildete Öffnungen, von denen in ihrem oberen Bereich die Öffnungen 72 und 74 auf einer horizontalen Linie liegen und im unteren Bereich auf einer dazu parallelen horizontalen Linie die Öffnungen 81 und 82 liegen. Die Öffnung 72 liegt oberhalb der Öffnung 80, die Öffnung 74 liegt oberhalb der Öffnung 82. Auf der Verbindungslinie zwischen der Öffnung 72 und Öffnung 80 befindet sich mittig die Öffnung 76, auf der Verbindungslinie zwischen der Öffnung 74 und der Öffnung 82 befindet sich mittig die Öffnung 78.

Die Ebene 70 ist nicht komplett eben, ein leichter Knick ist auf der Hälfte zwischen den Öffnungen 76 und 78 einerseits und 80 und 82 andererseits vorgesehen. Über die Befestigungsöffnungen 72, 74, 76, 78, 80, 82 können weitere Elemente des Kraftfahrzeuges befestigt werden.

Auf dem Schnittpunkt der Verbindungslinie zwischen der Öffnung 72 und 78 einerseits und der Öffnung 74 und 76 andererseits befindet sich eine runde Öffnung 84, die ebenfalls die Aufgabe einer Befestigungsöffnung besitzt.

Oberhalb des Radausschnittes 10, etwa 10 cm oberhalb des Scheitelpunktes 16, zieht sich ein horizontal verlaufender Knick 22 entlang, oberhalb dessen die Wand des Kotflügels stärker einwärts geneigt ist als unterhalb. Der Knick 22 beginnt an einer Ausschnittöffnung 12, die die Scheinwerfer/Blinkereinheit teilweise aufnimmt. Der obere Rand 36 dieses Ausschnittes 12 führt in den Knick 22 über. Das untere vordere Ende 34 der Ausschnittsöffnung 12 ist gegenüber dem oberen vorderen Ende 32 nach vorne gezogen, die Begrenzungslinien 36, die rückwärtige Begrenzungslinie 38, die untere Begrenzungslinie 40 und die gedachte vordere Begrenzungslinie zwischen den Punkten 32 und 34 schließen in etwa ein Parallelogramm ein, wobei jedoch die entsprechenden Ecken zwischen der oberen Begrenzungslinie 36 und der rückwärtigen Begrenzungslinie 38, die Ecke 42, abgerundet ist, ebenso wie die Ecke 40 zwischen der unteren Begrenzungslinie 40 und der rückwärtigen Begrenzungslinie 38. Der untere vordere Rand 28 der Ausschnittöffnung 12 ist somit in Fahrtrichtung nach vorne gezogen.

Der Rand der Öffnung 12 selbst wird nicht durch diese Begrenzungslinien gebildet, denn auch innerhalb dieser Begrenzungslinien 36, 38, 40 bleibt einwärts gezogen Blech stehen, der Blechrand 46 selbst ist in etwa halbkreisförmig nach rückwärts begrenzt.

In dem innerhalb des Ausschnitts stehengelassenen Blech ist eine Öffnung 118 vorgesehen, die längs von oben nach unten verläuft und in ihren oberen und unteren Endbereichen je einen nach hinten weisenden Fortsatz 120 bzw. 122 besitzt.

Durch die schräg nach oben hinten verlaufende Linie zwischen den Eckpunkten 34 und 32 des Scheinwerferausschnittes wird eine Schrägstellung der Scheinwerfer/Blinkereinheit erreicht, die die Aerodynamik des Fahrzeuges verbessert.

Zwischen dem Radausschnitt 10 und dem hinteren Rand 26 des Kotflügels ist eine Vertiefung 104 vorgesehen, die sich längs erstreckt und zur Aufnahme einer seitlichen Stoßleiste geeignet ist. Sie besitzt entsprechend zwei Löcher 106 und 108, wobei das hintere Loch 108 in etwa die Form eines Quadrates mit einem daran gesetzten, nach vorne weisenden kleineren Rechteck besitzt. Das Loch hat somit in etwa die Gestalt eines liegenden T. Weiterhin ist durch eine entsprechende Einbuchtung innerhalb der Vertiefung 104 eine Sicke 130 vorgesehen.

Am unteren Ende 90 des rückwärtigen Teils des Kotflügels befinden sich zwei Stufen 92 und 94, wobei die untere Stufe 94 einen Flansch für die Befestigung bildet. Die untere Stufe 94 besitzt zwei Befestigungsöffnungen 100 und 102, die darüberliegende, nicht ganz so weit einwärts eingezogene Stufe 92 besitzt eine vordere Längsöffnung 96 und eine rückwärtige Öffnung 98, die ähnlich der Öffnung 108 ausgebildet ist, lediglich mit dem Unterschied, daß das kleine von dem Quadrat wegweisende Rechteck in rückwärtige Richtung zeigt.

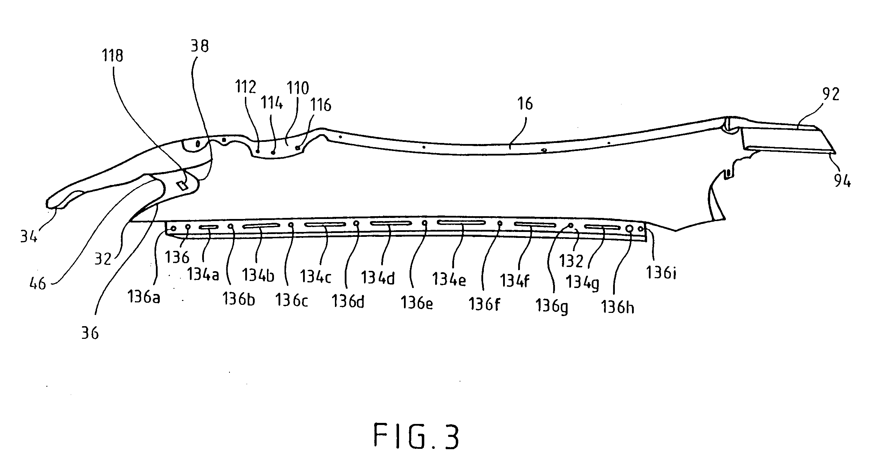

Am oberen Rand 28 des Kotflügels ist das Blech aus der üblichen, einwärts gezogenen Biegung heraus nach unten geführt und dann um 90° abgebogen, um einen einwärts gerichteten Befestigungsflansch zu bilden. Dieser Flansch ist am besten aus der Fig. 3 zu erkennen, dort ist auch zu sehen, daß der Flansch eine Reihe von Sicken 134 a - 134 g sowie eine Reihe von Befestigungslöchern 136 a - 136 e besitzt. Der Abstand der Befestigungslöcher ist auf das erwünschte Knautschverhalten des Kotflügels abgestimmt, durch die Wahl des Abstandes wird das Knautschverhalten beeinflußt. Weitere zusätzliche Bohrungen, die dort eingebrachten werden könnten, beeinflußt das Knautschverhalten nicht.

Aus Korrosionsschutzgründen wird der Kotflügel in verzinktem Blech ausgeführt.

## Patentansprüche

1. Vorderer Kotflügel für einen Personenkraftwagen mit
1. einem Radausschnitt (10),
2. einem Ausschnitt (12) im vorderen Bereich zur teilweisen Aufnahme von Scheinwerfer/Blinkereinheit,
3. Flanschen in den Randbereichen zur Befestigung von weiteren Teilen und zur Verschraubung mit der übrigen Personenkraftwagenkarosse,
4. einem Absatz (14) vor dem Radausschnitt (12), der oberhalb der Mitte zwischen Scheitelpunkt (16) des Radausschnittes (10) und unterem Rand (18) des Radausschnittes (10) liegt,
5. eine Einwärtsversetzung und Vorwärtsversetzung des Radausschnittrandes unterhalb des Absatzes (14)
6. einem einwärtsversetzten strukturierten Bereich (20) unterhalb des Absatzes (14) vor dem Radausschnitt (10),
7. Löchern innerhalb des einwärtsversetzten strukturierten Bereiches (20),
8. einem leichten, etwa horizontal verlaufenden Knick (22), der im oberen Bereich des Ausschnittes (12) für die Aufnahme von Scheinwerfer/Blinkereinheit beginnt, etwa mittig zwischen oberem Kotflügelrand (24) und Scheitelpunkt (16) des Radausschnittes (10) verläuft und bis an den hinteren Rand (26) des Kotflügels geführt ist,
gekennzeichnet durch die folgenden Merkmale,
9. der untere vordere Rand (28) des Ausschnitts (12) zur Aufnahme von Scheinwerfer/Blinkereinheit ist gegenüber dem oberen vorderen Rand (30) in Fahrtrichtung vorgezogen,
10. die Begrenzungslinien des Ausschnitts für die Aufnahme umschließen in etwa ein Parallelogramm, gebildet aus der gedachten Verbindungslinie zwischen der oberen (32) und unteren vorderen Ecke (34) des Ausschnittes, der oberen Begrenzung (36), der rückwärtigen Linie (38) und der unteren Begrenzung (40),
11. die Ecken (42,44) des Parallelogramms zwischen der oberen Linie (36) und der rückwärtigen Linie (38) sowie zwischen der unteren Linie (40) und der rückwärtigen Linie (38) sind abgerundet,
12. der rückwärtige Blechausschnitt (46) des Ausschnitts (12) zur Aufnahme für die Scheinwerfer/Blinkereinheit ist in etwa halbkreisförmig ausgebildet,
13. der Bereich (20) unterhalb des vor dem Radausschnitt (10) liegenden Absatzes (14) ist insgesamt einwärts angeordnet im Vergleich zu dem darüberliegenden Kotflügelbereich,
14. der untere Rand des Kotflügelbereichs vor dem Radausschnitt verläuft im vorderen Bereich (48) horizontal, anschließend in einem Winkel von etwa 45° schräg nach unten (50) und im letzten Bereich (52) wieder horizontal,
15. im Vorderbereich des Kotflügels ist zwischen dem Absatz (14) und dem unteren Rand (48) eine horizontal verlaufende Stufe (54) vorgesehen,
16. die horizontal verlaufende Stufe (54) weist ein Befestigungsloch (56) auf,
17. hinter der Stufe (54) ist unterhalb des Absatzes (14) eine nach unten einwärts führende Rundung (58) vorgesehen,
18. im vorderen Bereich unterhalb der Rundung (58) ist eine Vertiefung vorgesehen, die einzelne vertikale Biegungen zur Andeutung von vertikal verlaufenden Stufen (60, 62, 66) besitzt,
19. hinter den vertikal verlaufenden Stufen (60, 62, 66) ist eine Einwärtsvertiefung (64) unterhalb der Rundung (58) vorgesehen,
20. unterhalb der letzten vertikalen Stufe (66) und der Einwärtsvertiefung (64) befindet sich ein von Vorsprüngen oder Sicken begrenzter dreieckiger Flächenabschnitt (68),
21. hinter der Einwärtsvertiefung (64) und dem darunter liegenden dreieckigen Flächenabschnitt (68) ist ein von der Rundung (58) bis fast bis zum unteren Rand (52) sich erstreckender, im wesentlichen ebener Flächenabschnitt (70) mit darin vorgesehenen Öffnungen ausgebildet, der in seinem unteren Bereich einen schwachen Knick aufweist,
22. in dem ebenen Flächenabschnitt (70) bilden vier Öffnungen (72, 74, 80, 82) die Eckpunkte eines Rechtecks und liegen zwei weitere Öffnungen (76,78) mittig auf den vertikalen Verbindungslinien,
23. eine weitere Öffnung (84) liegt im Schnittpunkt der sich kreuzenden Verbindungslinien jeweils zwischen einer oberen Eckpunktöffnung (72 bzw. 74) und einer Öffnung (78 bzw. 76) auf der vertikalen Verbindungslinie,
24. im Bereich unterhalb des Absatzes (14) ist der vor- und einwärtsversetzte Rand (86) des Radausschnittes (10) mit einem einwärtsgerichteten Flansch (10) versehen, der Befestigungsöffnungen (112, 114, 116) aufweist,
25. unterhalb des ebenen Flächenabschnittes (70) ist eine Einwärtsstufe (88) vorgesehen, die einen einwärtsspringenden Befestigungsflansch besitzt.

2. Kotflügel nach Anspruch 1, dadurch gekennzeichnet, daß der untere Kotflügelrand (90) im Bereich hinter dem Radausschnitt (10) eine Stufe (92) und darunter einen nach unten gerichteten Flansch (94) aufweist, wobei Stufe (92) und Flansch (94) Befestigungslöcher (96, 98, 100, 102) besitzen, und auf etwa halber Höhe des Radausschnittes (10) hinter dem Radausschnitt (10) eine sich horizontal erstreckende Vertiefung (104) vorgesehen ist, in die zwei Löcher (106, 108) eingelassen sind.

3. Kotflügel nach Anspruch 1 oder 2, dadurch gekennzeichnet, daß in dem stehengelassenen Blech zwischen den Begrenzungslinien (36, 38) des Ausschnittes (12) zur Aufnahme von Scheinwerfer/Blinkereinheit und der halbkreisförmigen Kante (46) des Blechs eine längliche, im wesentlichen vertikal ausgerichtete Öffnung (118) vorgesehen ist, die in ihrem oberen und unteren Ende jeweils eine nach hinten weisenden Einschnitt (120, 122) besitzt.

4. Kotflügel nach Anspruch 1, dadurch gekennzeichnet, daß in den vertikal angeordneten Stufen (60, 62) Löcher (124, 126) vorgesehen sind.

5. Kotflügel nach Anspruch 4, dadurch gekennzeichnet, daß das hintere Loch (126) in den vertikalen Stufen (62) sowie ein Loch (128) in der Einwärtsvertiefung (64) sechseckig ausgebildet sind.

6. Kotflügel nach einem der vorhergehenden Ansprüche, dadurch gekennzeichnet, daß in der sich hinter dem Radausschnitt erstreckenden, horizontal verlaufenden Vertiefung (104) eine Sicke (130) mit ovaler Formgebung ausgebildet ist.

7. Kotflügel nach einem der vorhergehenden Ansprüche, dadurch gekennzeichnet, daß das hintere Befestigungsloch (98) in der Stufe (92) hinter dem Radausschnitt (10) etwa die Form eines Quadrates mit einem von dessen Hinterseite nach hinten verlaufenden Rechteck aufweist.

8. Kotflügel nach einem der vorhergehenden Ansprüche, dadurch gekennzeichnet, daß das hintere Loch (108) der horizontalen Vertiefung (104) hinter dem Radausschnitt (10) in etwa die Form eines Quadrates mit einem von dessen vorderer Seite nach vorne verlaufenden Rechteck aufweist.

9. Kotflügel nach einem der vorhergehenden Ansprüche, dadurch gekennzeichnet, daß an der Oberkante (24) das Blech des Kotflügels nach unten und anschließend einwärts (132) gezogen ist, wobei der einwärts gerichtete, in etwa horizontale Bereich (132) Sicken (134 a bis g) und Löcher (136 a bis e) aufweist.

10. Kotflügel nach Anspruch 9, dadurch gekennzeichnet, daß die Löcher (136 a bis e) in dem Bereich (132) von vorne nach hinten etwa folgende Abstände (Lochmitte zu Lochmitte) aufweisen: 3,2 cm; 8,5 cm; 12,7 cm; 13,7 cm; 15,0 cm; 16,1 cm; 15,8 cm; 13 cm; 3 cm.

## Claims

1. Front wing for a passenger car, comprising
1. a wheel opening (10),
2. an opening (12) in the front portion for receiving part of the headlamp/direction indicator unit,
3. flanges in the peripheral portions for attaching additional parts and for screwing to the remainder of the passenger car body,
4. a shoulder (14) in front of the wheel opening (12), situated above the centre between the highest point (16) of the wheel opening (10) and the lower edge (18) of the wheel opening (10),
5. the edge of the wheel opening being offset inwards and forwards below the shoulder (14),
6. an inwardly-offset structured portion (20) below the shoulder (14) in front of the wheel opening (10),
7. holes inside the inwardly-offset structured portion (20),
8. a slight, more or less horizontal bend (22), beginning in the upper portion of the opening (12) for receiving the headlamp/direction indicator unit, running more or less centrally between the upper edge of the wing (24) and the highest point (16) of the wheel opening (10), and extending as far as the rear edge (26) of the wing,
characterised by the following features:
9. the lower front edge (28) of the opening (12) for receiving the headlamp/direction indicator unit is advanced with respect to the upper front edge (30) in the direction of travel,
10. the boundary lines of the receiving opening approximately enclose a parallelogram constituted by the imaginary line connecting the upper (32) and lower front corner (34) of the opening, the upper boundary (36), the back line (38) and the lower boundary (40),
11. the corners (42, 44) of the parallelogram between the upper line (36) and the back line (38) and between the lower line (40) and the back line (38) are rounded,
12. the rear sheet-metal cutout (46) of the opening (12) for receiving the headlamp/direction indicator unit is approximately semi-circular in shape,
13. the portion (20) below the shoulder (14) situated in front of the wheel opening (10) is as a whole further inwards than the wing portion situated above it,
14. the lower edge of the wing portion in front of the wheel opening extends horizontally in the front portion (48), then slopes downwards (50) at an angle of approximately 45° and returns to a horizontal orientation in the final portion (52),
15. a horizontally extending step (54) is provided in the front portion of the wing, between the shoulder (14) and the lower edge (48),
16. the horizontally extending step (54) incorporates a fixing hole (56),
17. a curved region (58) extending downwards and inwards is provided behind the step (54) below the shoulder (14),
18. in the front portion below the curved region (58) is a depression which has individual vertical curves to suggest steps (60, 62, 66) extending vertically,
19. behind the vertically extending steps (60, 62, 66) is provided an inward depression (64) below the curved region (58),
20. below the last vertical step (66) and the inward depression (64) is a triangular surface (68) delimited by projections or welts,
21. behind the inward depression (64) and the triangular surface (68) beneath it is a substantially flat surface (70) which incorporates openings and which extends from the curved region (58) almost as far as the lower edge (52), and the lower portion of which exhibits a slight bend,
22. in the flat surface (70) four openings (72, 74, 80, 82) form the corners of an oblong and two additional openings (76, 78) lie centrally on the vertical connecting lines,
23. a further opening (84) lies on the vertical connecting line at the point of intersection of the lines connecting, respectively, an upper corner opening (72 or 74) and an opening (78 or 76) on the vertical connecting line,
24. in the region below the shoulder (14) the edge (86), offset forwards and inwards, of the wheel opening (10) is provided with an inwardly directed flange (10) incorporating fixing holes (112, 114, 116),
25. beneath the flat surface (70) is an inward step (88) which has an inward-engaging fixing flange.

2. Wing according to claim 1, characterised in that in the region behind the wheel opening (10) the lower edge (90) of the wing incorporates a step (92) and below it a downwardly directed flange (94), the step (92) and the flange (94) having fixing holes (96, 98, 100, 102), and roughly halfway up the wheel opening (10) and behind said wheel opening (10) there is provided a horizontally extending depression (104) into which two holes (106, 108) have been made.

3. Wing according to claim 1 or 2, characterised in that in the metal sheet remaining between the lines (36, 38) delimiting the opening (12) for receiving the headlamp/direction indicator unit and the semi-circular rim (46) of the metal sheet there is provided an elongate slot (118) of substantially vertically orientation which has a rearward-facing indentation (120, 122) at both its upper and lower end.

4. Wing according to claim 1, characterised in that holes (124, 126) are provided in the vertical steps (60, 62).

5. Wing according to claim 4, characterised in that the rear hole (126) in the vertical steps (62) and a hole (128) in the inward depression (64) are hexagonal.

6. Wing according to any of the preceding claims, characterised in that an oval-shaped welt (130) is formed in the horizontal depression (104) extending behind the wheel opening.

7. Wing according to any of the preceding claims, characterised in that the rear fixing hole (98) in the step (92) behind the wheel opening (10) is roughly in the shape of a square with an oblong extending rearwards from the back face thereof.

8. Wing according to any of the preceding claims, characterised in that the rear hole (108) of the horizontal depression (104) behind the wheel opening (10) is roughly in the shape of a square with an oblong extending forwards from the front face thereof.

9. Wing according to any of the preceding claims, characterised in that at the upper rim (24) the metal sheet of the wing is drawn downwards and then inwards (132), and the inward-directed, approximately horizontal portion (132) incorporates welts (134 a to g) and holes (136 a to e).

10. Wing according to claim 9, characterised in that the intervals from the front to the rear between the holes (136 a to e) in the portion (132) are as follows (from the centres of each hole): 3.2 cm; 8.5 cm; 12.7 cm; 13.7 cm; 15.0 cm; 16.1 cm; 15.8 cm; 13 cm; 3 cm.

## Revendications

1. Aile avant pour une voiture particulière, présentant:
1. une échancrure de roue (10),
2. une découpure (12) dans la région avant pour le logement partiel d'un ensemble projecteur/feu clignotant,
3. des pattes dans les régions des bords pour la fixation d'autres éléments et pour le montage par vis de l'aile sur le reste de la carrosserie de la voiture,
4. un épaulement (14) en avant de l'échancrure de roue (10), situé au-dessus du milieu entre le sommet (16) de l'échancrure de roue (10) et le bord inférieur (18) de l'échancrure de roue (10),
5. un décalage en dedans et un décalage en avant du bord de l'échancrure de roue au-dessous de l'épaulement (14),
6. une région structurée décalée en dedans (20) au-dessous de l'épaulement (14) en avant de l'échancrure de roue (10),
7. des trous dans la région structurée décalée en dedans (20),
8. une légère pliure dirigée à peu près horizontalement (22) qui commence dans la région supérieure de la découpure (13) destinée à recevoir l'ensemble projecteur/feu clignotant, s'étend à peu près à mi-hauteur entre le bord supérieur (24) de l'aile et le sommet (16) de l'échancrure de roue (10), jusqu'au bord arrière (26) de l'aile.
caractérisée par les particularités suivantes:
9. le bord inférieur avant (28) de la découpure (12) destinée à recevoir l'ensemble projecteur/feu clignotant est en saillie dans le sens de la marche par rapport à son bord supérieur avant (30),
10. les lignes de délimitation de la découpure destinée à recevoir l'ensemble projecteur/feu clignotant forment à peu près un parallèlogramme, constitué par la ligne de jonction imaginaire entre les angles antérieurs, supérieur (32) et inférieur (34), de la découpure, par la limite supérieure (36), par la ligne postérieure (38) et par la limite inférieure (40),
11. les angles (42, 44) du parallèlogramme entre la ligne supérieure (36) et la ligne postérieure (38), ainsi qu'entre la ligne inférieure (40) et la ligne postérieure (38), sont arrondis,
12. l'échancrure arrière de la tôle (46) dans la découpure (12) destinée à recevoir l'ensemble projecteur/feu clignotant a une forme à peu près semi-circulaire,
13. la région (20) au-dessous de l'épaulement (14) situé en avant l'échancrure de roue (10) est disposée en dedans, dans son ensemble, par rapport à la région de l'aile située au-dessus,
14. le bord inférieur de la région de l'aile en avant l'échancrure de roue s'étend horizontalement dans la partie avant (48), puis obliquement vers le bas sous un angle d'environ 45° dans la partie intermédiaire (50) et de nouveau horizontalement dans la dernière partie (52),
15. dans la région avant de l'aile, il est prévu un gradin dirigé horizontalement (54) entre l'épaulement (14) et le bord inférieur (48),
16. le gradin dirigé horizontalement (54) présente un trou de fixation (56),
17. en arrière du gradin (54), il est prévu, au-dessous de l'épaulement (14), un arrondi en bas et en dedans (58),
18. dans la région avant, au-dessous de l'arrondi (58), il est prévu un creux qui comporte des courbures verticales individuelles pour définir des gradins dirigés verticalement (60, 62, 66),
19. en arrière des gradins dirigés verticalement (60, 62, 66), il est prévu un creux en dedans (64) au-dessous de l'arrondi (58),
20. au-dessous du dernier gradin vertical (66) et du creux en dedans (64) se trouve un segment de surface triangulaire (68) délimité par des saillies ou des moulures,
21. en arrière du creux en dedans (64) et du segment de surface triangulaire (68) situé au-dessous, il est formé un segment de surface pratiquement plan (70) qui, depuis l'arrondi (58), s'étend presque jusqu'au bord inférieur (52), dans lequel sont prévues des ouvertures, et qui présente une faible pliure dans sa région inférieure,
22. dans le segment de surface plan (70), quatre ouvertures (72, 74, 80, 82) constituent les sommets d'un rectangle et deux autres ouvertures (76, 78) sont situées au milieu des lignes de jonction verticales,
23. une autre ouverture (84) est située au point d'intersection des lignes se croisant qui relient chacune une ouverture d'angle supérieure (72 ou 74) et une ouverture (78 ou 76) située sur une ligne de jonction verticale,
24. dans la région au-dessous de l'épaulement (14), le bord décalé en avant et en dedans (86) de l'échancrure de roue (10) est muni d'un rebord (110) qui présente des ouvertures de fixation (112, 114, 116),
25. au-dessous du segment de surface plan (70), il est prévu un gradin en dedans (88) qui comporte une patte de fixation en saillie vers l'intérieur.

2. Aile selon la revendication 1, caractérisée en ce que le bord inférieur (90) de l'aile présente, dans la région en arrière de l'échancrure de roue (10), un gradin (92) et, au-dessous de celui-ci, une patte dirigée vers le bas (94), le gradin (92) et la patte (94) comportant des trous de fixation (96, 98, 100, 102), et en ce qu'il est prévu, à peu près à mi-hauteur de l'échancrure de roue (10), en arrière de l'échancrure de roue (10), un creux (104) qui s'étend horizontalement et dans lequel sont pratiqués deux trous (106, 108).

3. Aile selon la revendication 1 ou 2, caractérisée en ce qu'il est prévu, dans la tôle restante entre les lignes de délimitation (36, 38) de la découpure (12) destinée à recevoir l'ensemble projecteur/feu clignotant et le bord semi-circulaire (46) de la tôle, une ouverture oblongue (118) orientée essentiellement en direction verticale, qui comporte, à chacune de ses extrémités supérieure et inférieure, une encoche dirigée vers l'arrière.

4. Aile selon la revendication 1, caractérisée en ce que des trous (124, 126) sont prévus dans les gradins (60, 62) disposés verticalement.

5. Aile selon la revendication 4, caractérisée en ce que le trou postérieur (126) dans le gradin vertical (62), ainsi qu'un trou (128) dans le creux en dedans (64) sont réalisés sous forme hexagonale.

6. Aile selon l'une quelconque des revendications 1 à 5, caractérisée en ce qu'une moulure (130) de forme ovale est formée dans le creux (104) dirigé horizontalement qui s'étend en arrière de l'échancrure de roue.

7. Aile selon l'une quelconque des revendications 1 à 6, caractérisée en ce que le trou de fixation postérieur (98) dans le gradin (92) en arrière de l'échancrure de roue (10) présente à peu près la forme d'un carré avec un rectangle qui s'étend vers l'arrière à partir de son côté postérieur.

8. Aile selon l'une quelconque des revendications 1 à 7, caractérisée en ce que le trou postérieur (108) du creux horizontal (104) en arrière de l'échancrure de roue (10) présente à peu près la forme d'un carré avec un rectangle qui s'étend vers l'avant à partir de son côté antérieur.

9. Aile selon l'une quelconque des revendications 1 à 8, caractérisée en ce qu'au niveau du bord supérieur (24), la tôle de l'aile est étirée vers le bas et ensuite en dedans (132), la région à peu près horizontale dirigée en dedans (132) présentant des moulures (134 a à g) et des trous (136 a à i).

10. Aile selon la revendication 9, caractérisée en ce que les trous (136 a à i) dans la région (132) présentent à peu près les écarts suivants (de centre à centre) de l'avant à l'arrière: 3,2 cm; 8,5 cm; 12,7 cm; 13,7 cm; 15,0 cm; 16,1 cm; 15,8 cm; 13 cm; 3 cm.
